# EUROPEAN PATENT SPECIFICATION

(11) **EP 3 249 296 B1**
(45) Date of publication and mention of the grant of the patent: **04.09.2019**
(21) Application number: 16755444.3
(22) Date of filing: 23.02.2016
(51) Int. Cl.: F23G 7/06, F23G 7/00

(54) **VOLATILE ORGANIC COMPOUNDS COMBUSTION DEVICE, BOILER, TANKER, AND VOLATILE ORGANIC COMPOUND COMBUSTION METHOD**
VORRICHTUNG ZUM VERBRENNEN FLÜCHTIGER ORGANISCHER VERBINDUNGEN, KESSEL, TANKER UND VERFAHREN ZUM VERBRENNEN FLÜCHTIGER ORGANISCHER VERBINDUNGEN
DISPOSITIF DE COMBUSTION DE COMPOSÉS ORGANIQUES VOLATILS, CHAUDIÈRE, NAVIRES-CITERNES ET PROCÉDÉ DE COMBUSTION DE COMPOSÉS ORGANIQUES VOLATILS

(30) Priority: 27.02.2015 JP 2015038285
(43) Date of publication of application: 29.11.2017
(73) Proprietor: Mitsubishi Heavy Industries, Ltd., Tokyo 108-8215 (JP)
(72) Inventor: AMANO, Masahiro, Nagasaki-shi Nagasaki 850-8610 (JP); MATSUSHITA, Koichi, Nagasaki-shi Nagasaki 850-8610 (JP)
(74) Representative: Hoffmann Eitle
(86) International application number: PCT/JP2016/055148
(87) International publication number: WO 2016/136699

(56) References cited:
- EP-A2- 1 684 013
- WO-A1-98/33026
- WO-A1-2011/092450
- WO-A1-2011/092450
- WO-A1-2013/162965
- GB-A- 2 471 909
- JP-A- 2003 302 030
- JP-A- 2009 061 402
- JP-A- 2012 215 382

## Description

### Technical Field

The present invention relates to a volatile organic compound combustion device which is used when treating volatile organic compounds, a boiler, a tanker, and a volatile organic compound combustion method.

### Background Art

The emission of volatile organic compounds (VOC) to an environment is regulated, and thus it is necessary to reduce the VOC which is emitted to the environment.

Japanese Unexamined Patent Application Publication No. 2010-203364 discloses an engine system which is realized with a simple structure and at low cost even in a case where product gas which is obtained by reforming VOC is used as fuel gas.

Japanese Patent No. 5162949 discloses an induction heating furnace having a furnace shell structure in which the airtightness of a furnace can be secured with a simple structure without increasing a size and there is no concern that electric discharge may occur. In this induction heating furnace, a furnace shell is disposed on the outside of a furnace shell surrounding a material to be heated, in a multilayered manner with a distance therebetween, inert gas is introduced into the space between the furnace shells, and the pressure of the inert gas is set to be higher than or equal to the pressure of atmosphere gas in the furnace shell surrounding a material to be heated.

WO 2011/092450 A1 describes the combustion of a mixture of VOC and inert gas, vented from a tank, and oil supplied to a burner.

GB 2471909 A describes the combustion of boil-off gas and represents the closest prior art.

### Summary of Invention

### Technical Problem

On the other hand, as a method of treating VOC, there is a method of burning the VOC to incinerate it. In this case, the VOC is burned by using a dedicated burner which injects the VOC. However, it is necessary to prepare a dedicated compressor which pressurizes the VOC to a pressure sufficiently higher than the pressure in a furnace, and thus there is a problem in which the manufacturing cost of equipment for treating the VOC increases.

The present invention has been made in view of such circumstances and an object thereof is to provide a volatile organic compound combustion device which reduces the manufacturing cost of equipment for burning volatile organic compounds, a boiler, a tanker, and a volatile organic compound combustion method.

### Solution to Problem

This object is solved by a device with the features of claim 1 and a method with the features of claim 11. Preferred embodiments follow form the other claims. A volatile organic compound combustion device according to a first aspect of the present invention includes: a mixer which mixes VOC gas containing volatile organic compounds and combustion air; and a burner which burns fuel by using VOC mixed air mixed by the mixer.

When burning volatile organic compounds by using a dedicated burner which injects only VOC gas, it is necessary to prepare a dedicated compressor which pressurizes the VOC gas to a pressure sufficiently higher than the pressure in a furnace. Further, for example, even in a case of burning volatile organic compounds with a burner by mixing VOC gas with fuel which is regarded as a fuel gas, it is necessary to prepare a dedicated compressor which pressurizes the VOC gas to the same degree as the pressure of the fuel gas.

Therefore, in the volatile organic compound combustion device according to the first aspect of the present invention, the VOC gas is premixed with the combustion air for burning fuel by the mixer, whereby the volatile organic compounds are burned by using the burner which burns the fuel. In this manner, it is only necessary to mix the VOC gas with the combustion air, and therefore, it is not necessary to make the pressure of the VOC gas higher than the pressure in a furnace or to pressurize the VOC gas to the same degree as the pressure of the fuel gas, and it is possible to make the pressure for pressurizing the VOC gas relatively low. In this way, it is possible to burn the volatile organic compounds by pressurizing the VOC gas by using a VOC gas blower or the like having a smaller scale and a lower pressure ratio than a compressor, and it is possible to reduce the manufacturing cost.

The volatile organic compound combustion device according to the first aspect of the present invention further includes a wind box which supplies the VOC mixed air to the burner. The wind box includes an inner casing in which an atmosphere to which the combustion air and the VOC gas are injected is formed inside thereof, and an outer casing which surrounds the inner casing.

In such a volatile organic compound combustion device, the wind box in which the VOC mixed air in which the VOC gas and the combustion air are mixed is stored is made in a double casing structure, whereby it is possible to more reliably prevent leakage of the VOC mixed air in the wind box.

The volatile organic compound combustion device according to the first aspect of the present invention further includes a purge gas supplying device which supplies purge gas to a space which is formed between the inner casing and the outer casing.

In such a volatile organic compound combustion device, the purge gas having a higher pressure than the inside of the inner casing is supplied to the space between the inner casing and the outer casing, whereby it is possible to more reliably prevent leakage of the VOC mixed air in the wind box.

The purge gas is some of seal air produced for cooling a view port formed in a boiler main body forming a combustion chamber in which the fuel is burned.

In such a volatile organic compound combustion device, some of the seal air for cooling the view port is used as the purge gas which is supplied to the space between the inner casing and the outer casing, whereby the purge gas supplying device which supplies the purge gas to the space between the inner casing and the outer casing does not need to be provided separately from a seal air supplying device which supplies the seal air to the view port, and the volatile organic compound combustion device can be manufactured at low cost.

The mixer is formed with: a combustion air outlet for injecting the combustion air; a plurality of VOC gas flow paths through which the VOC gas flows; and a plurality of VOC gas blowing-out nozzles corresponding to the plurality of VOC gas flow paths. The plurality of VOC gas blowing-out nozzles inject the VOC gas to a region to which the combustion air is injected.

In the mixer of such a volatile organic compound combustion device, the VOC gas is distributed to the plurality of VOC gas flow paths and then injected from each VOC gas blowing-out nozzle, and therefore, it is possible to equally inject the VOC gas supplied to the mixer from the VOC gas blowing-out nozzles. Further, such a mixer can be formed on a relatively small scale and installed in a space-saving manner.

The plurality of VOC gas flow paths are formed in such a manner that the longer the flow path length is, the larger the flow path cross-sectional area becomes.

Even in a case where the distances from a VOC gas inlet to which the VOC gas is supplied to the plurality of VOC gas blowing-out nozzles in the mixer are different from each other, by forming the plurality of VOC gas flow paths in such a manner that the longer the flow path length is, the larger the flow path cross-sectional area becomes, it is possible to uniformly inject the VOC gas from the plurality of VOC gas blowing-out nozzles, and it is possible to properly mix the VOC gas and the combustion air such that the concentration of the volatile organic compound in the VOC mixed air is not biased.

The volatile organic compound combustion device according to the first aspect of the present invention further includes a VOC gas blower which pressurizes the VOC gas to a pressure calculated based on a pressure of the combustion air and supplies the pressurized VOC gas to the mixer.

In such a volatile organic compound combustion device, since it is sufficient if the VOC gas is pressurized to the pressure calculated based on the pressure of the combustion air and mixed with the combustion air, a blower having a pressure ratio lower than that in a compressor can be used. In this way, it is possible to reduce an installation cost and an operating cost.

The VOC gas has lower oxygen concentration than the combustion air and contains more inert gas than the combustion air.

The VOC gas has lower oxygen concentration than the combustion air and contains more inert gas than the combustion air, whereby it is possible to lower a combustion temperature when the fuel burns, and it is possible to reduce the concentration of a nitrogen oxide (NOx) in flue gas which is generated due to combustion of the fuel.

The volatile organic compound combustion device according to the first aspect of the present invention further includes inert gas supply piping which supplies, as the inert gas, flue gas which is generated by burning the fuel by using the VOC mixed air to a heavy oil tank which stores heavy oil from which the volatile organic compounds volatilize.

In such a volatile organic compound combustion device, as the inert gas which is supplied to the heavy oil tank, the flue gas which is generated due to combustion of the fuel is used. In this manner, the flue gas which is generated due to combustion of the volatile organic compounds can also be used as the inert gas, and therefore, it is possible to reduce the amount of fuel which is burned in order to produce the inert gas.

A boiler according to a second aspect of the present invention includes the volatile organic compound combustion device according to the present invention.

Such a boiler is provided with the volatile organic compound combustion device, and therefore, it is possible to burn the volatile organic compounds with equipment having a low manufacturing cost.

A tanker according to a third aspect of the present invention includes: the volatile organic compound combustion device according to the present invention; and the heavy oil tank.

Such a tanker is provided with the volatile organic compound combustion device according to the present invention, and therefore, it is possible to burn the volatile organic compounds volatilizing from the heavy oil tank with equipment having a low manufacturing cost.

A volatile organic compound combustion method according to a fourth aspect of the present invention includes: a step of producing VOC mixed air by mixing VOC gas containing volatile organic compounds and combustion air; and a step of burning fuel by using the VOC mixed air.

When burning volatile organic compounds by using a dedicated burner which injects only VOC gas, it is necessary to prepare a dedicated compressor which pressurizes the VOC gas to a pressure sufficiently higher than the pressure in a furnace. Further, for example, even in a case of burning volatile organic compounds with a burner by mixing VOC gas with fuel which is regarded as a fuel gas, it is necessary to prepare a dedicated compressor which pressurizes the VOC gas to the same degree as the pressure of the fuel gas.

Therefore, according to the volatile organic compound combustion method of the fourth aspect of the present invention, the VOC mixed air is produced by premixing the VOC gas with the combustion air for burning fuel, and the fuel is burned by using the VOC mixed air. In this manner, it is only necessary to mix the VOC with the combustion air, and therefore, it is not necessary to make the pressure of the VOC higher than the pressure in a furnace or to pressurize the VOC gas to the same degree as the pressure of the fuel gas, and it is possible to make the pressure for pressurizing the VOC gas relatively low. In this way, it is possible to easily burn the volatile organic compounds by using a blower or the like having a smaller scale and a lower pressure ratio than a compressor. Advantageous Effects of Invention

According to the volatile organic compound combustion device, the boiler, the tanker, and the volatile organic compound combustion method according to the present invention, it is possible to reduce the manufacturing cost of equipment for burning the volatile organic compounds.

### Brief Description of Drawings

Fig. 1 is a conceptual diagram showing a volatile organic compound combustion device according to an embodiment of the present invention.
Fig. 2 is a perspective view showing a mixer of the volatile organic compound combustion device.
Fig. 3 is a perspective view showing a VOC duct of the mixer.
Fig. 4 is a side view showing a wind box of the volatile organic compound combustion device.
Fig. 5 is a bottom view showing a burner of the volatile organic compound combustion device.
Fig. 6 is a schematic diagram showing the burner of Fig. 5.
Fig. 7 is a plan view showing a burner of a first comparative example.
Fig. 8 is a schematic diagram showing a modification example of the volatile organic compound combustion device.

### Description of Embodiments

Hereinafter, a volatile organic compound combustion device according to an embodiment of the present invention will be described with reference to the drawings.

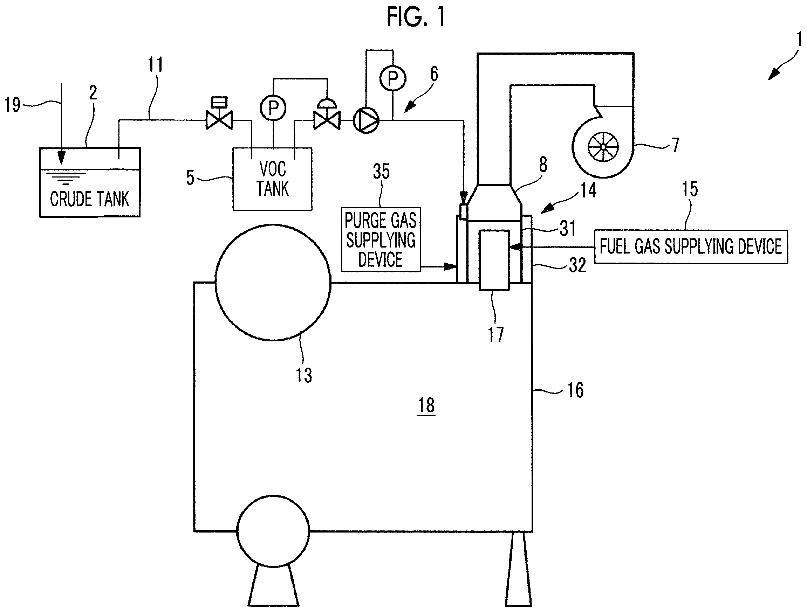

A volatile organic compound combustion device 1 is installed in a tanker for transporting crude oil and equipment (FPSO: Floating Production, Storage and Offloading, or the like) for storing crude oil and is applied to a boiler provided together with a crude tank 2, as shown in Fig. 1. In the crude tank 2, crude oil is stored in a storage space formed inside thereof. Volatile organic compounds (VOC) having combustibility volatilize from the crude oil.

The volatile organic compound combustion device 1 is provided with a VOC gas tank 5, a VOC gas blower 6, a boiler blower 7, and a mixer 8.

The VOC gas tank 5 is connected to an upper portion of an area in which the crude oil is stored, of the storage space of the crude tank 2, through VOC gas piping 11 and stores VOC gas which is supplied from the crude tank 2.

The VOC gas blower 6 pressurizes the VOC gas stored in the VOC gas tank 5 and supplies the VOC gas pressurized to a predetermined pressure (for example, 60 mbar) to the mixer 8.

The boiler blower 7 pressurizes air and supplies combustion air pressurized to a predetermined pressure (for example, 60 mbar) to the mixer 8.

The mixer 8 produces VOC mixed air by premixing the VOC gas supplied from the VOC gas blower 6 with the combustion air supplied from the boiler blower 7.

The volatile organic compound combustion device 1 is provided with a wind box 14, a fuel gas supplying device 15, a boiler main body 16, and a burner 17.

The wind box 14 temporarily stores the VOC mixed air premixed by the mixer 8, rectifies an air flow, and supplies it to the burner 17 at a constant flow rate.

The fuel gas supplying device 15 supplies fuel gas (fuel) pressurized to a predetermined pressure (for example, 1 bar) to the burner 17. As the fuel gas, gas of a hydrocarbon compound such as methane, ethane, or propane is exemplified.

The boiler main body 16 is provided with a combustion chamber 18, and a flame is formed in the combustion chamber 18.

The burner 17 burns the fuel gas supplied from the fuel gas supplying device 15 in the combustion chamber 18 by using the VOC mixed air supplied from the wind box 14.

The boiler main body 16 is provided with a heat exchanger such as an evaporator (not shown). The heat exchanger produces high-temperature and high-pressure steam by heating water supplied from the outside to a steam drum 13 by using heat generated by combustion of the fuel gas. The steam produced by the heat exchanger is collected into the steam drum 13, and the steam separated in the steam drum 13 is supplied to an external demander (not shown). The boiler main body 16 further has a plurality of view ports (not shown) formed in a wall surface in order to view the state of the combustion chamber 18 of the inside from the outside of the boiler main body 16.

The volatile organic compound combustion device 1 is further provided with inert gas supply piping 19 connected to an upper portion of the crude tank 2. The inert gas supply piping 19 supplies some or the whole of flue gas generated in the boiler main body 16 by the combustion of the fuel gas to the upper part of the storage space of the crude tank 2 as inert gas. In Fig. 1, the upstream side of the inert gas supply piping 19 is not shown. However, it is provided at an arbitrary position in a smoke furnace for the flue gas discharged from the boiler main body 16.

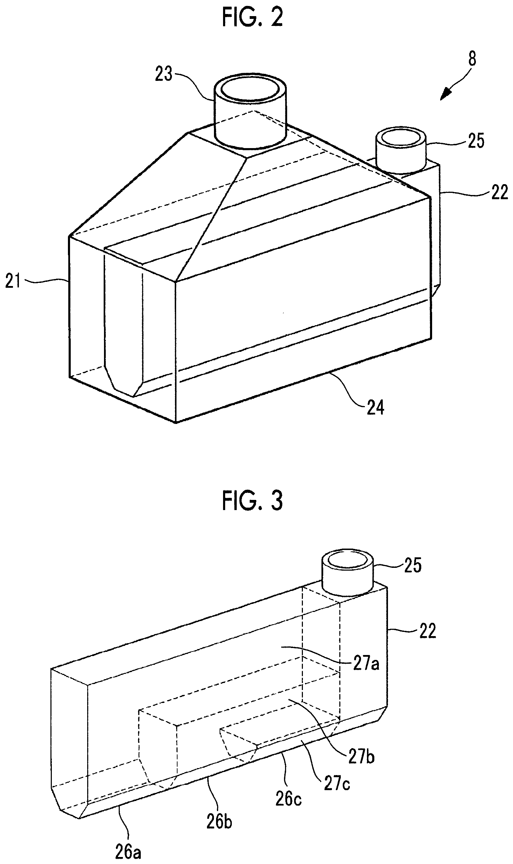

In Fig. 2, the mixer 8 for mixing the VOC gas and the combustion air is shown. The mixer 8 is provided with a combustion air duct 21 and a VOC gas duct 22. The combustion air duct 21 is formed into a container formed in a rectangular parallelepiped shape and having the inside which is hollow, and a combustion air inlet 23 and a combustion air outlet 24 are formed therein. The combustion air inlet 23 is formed at the vertically upper end of the combustion air duct 21 and supplies the combustion air pressurized by the boiler blower 7 to the inside of the combustion air duct 21. The combustion air outlet 24 is formed by opening the entirety of the vertically lower surface of the combustion air duct 21 and sends the combustion air existing in the combustion air duct 21 vertically downward.

The VOC gas duct 22 is formed in the shape of a container formed in a rectangular parallelepiped shape and having the inside which is hollow, and has a shape that is thinner and longer than the combustion air duct 21. The VOC gas duct 22 is disposed inside of the combustion air duct 21 in such a structure as to be inserted from the side of the combustion air duct 21. Most of the VOC gas duct 22 is installed over the entire longitudinal direction of the inside of the combustion air duct 21, and the remaining portion is exposed to the outside of the combustion air duct 21.

In the VOC gas duct 22, as shown in Fig. 3, a VOC gas inlet 25, a plurality of VOC gas blowing-out nozzles 26a, 26b, and 26c, and a plurality of VOC gas flow paths 27a, 27b, and 27c are formed. The number of VOC gas blowing-out nozzles and the number of VOC gas flow paths are not limited to three as in this embodiment and may be two or may be four or more.

The VOC gas inlet 25 is formed at the vertically upper end of the portion which is disposed outside the combustion air duct 21, of the VOC gas duct 22. The VOC gas inlet 25 divergingly supplies the VOC gas which is supplied from the VOC gas blower 6, to the plurality of VOC gas flow paths 27a, 27b, and 27c.

The respective VOC gas blowing-out nozzles 26a, 26b, and 26c are disposed side by side on a straight line along a longitudinal direction on the lower surface of the VOC gas duct 22. Each of the VOC gas blowing-out nozzles 26a, 26b, and 26c is provided at the same height position as the vertically lower end of the combustion air duct 21. Therefore, each of the VOC gas blowing-out nozzles 26a, 26b, and 26c is disposed so as to be surrounded by the combustion air outlet 24 of the combustion air duct 21.

Each of the VOC gas blowing-out nozzles 26a, 26b, and 26c is formed into a tapered shape in which the flow path area decreases toward the tip, and is made such that the flow path cross-sectional area decreases toward the downstream side in a flow direction in which the VOC gas flows and the VOC gas is accelerated and ejected vertically downward.

The plurality of VOC gas flow paths 27a, 27b, and 27c are formed inside of the VOC gas duct 22 and correspond on a one-to-one basis to the plurality of VOC gas blowing-out nozzles 26a, 26b, and 26c. Therefore, the first VOC gas blowing-out nozzle 26a is connected to the downstream end of the first VOC gas flow path 27a, the second VOC gas blowing-out nozzle 26b is connected to the downstream end of the second VOC gas flow path 27b, and the third VOC gas blowing-out nozzle 26c is connected to the downstream end of the third VOC gas flow path 27c. In this manner, each of the VOC gas flow paths 27a, 27b, and 27c is an independent flow path.

Each of the VOC gas flow paths 27a, 27b, and 27c extends in the longitudinal direction of the VOC gas duct 22, the second VOC gas flow path 27b is located below the first VOC gas flow path 27a, and the third VOC gas flow path 27c is located below the second VOC gas flow path 27b. Therefore, the first VOC gas flow path 27a is formed such that the flow path bypasses the second VOC gas flow path 27b from the vertically upper side, and therefore, the flow path length of the first VOC gas flow path 27a is longer than that of the second VOC gas flow path 27b. Similarly, the second VOC gas flow path 27b is formed such that the flow path bypasses the third VOC gas flow path 27c from the vertically upper side, and therefore, the flow path length of the second VOC gas flow path 27b is longer than that of the third VOC gas flow path 27c. Accordingly, the first VOC gas blowing-out nozzle 26a is located at the position farthest from the VOC gas inlet 25, and the third VOC gas blowing-out nozzle 26c is located at the position closest to the VOC gas inlet 25.

Then, the VOC gas flow paths 27a, 27b, and 27c are formed in such a manner that the longer the flow path length is, the larger the flow path cross-sectional area becomes. That is, the VOC gas flow paths 27a, 27b, and 27c are formed such that the flow path cross-sectional area of the VOC gas flow path which is connected to the VOC gas blowing-out nozzle which is farther from the VOC gas inlet 25 in the horizontal direction, among the VOC gas blowing-out nozzles 26a, 26b, and 26c, becomes larger. Specifically, the first VOC gas flow path 27a corresponding to the first VOC gas blowing-out nozzle 26a farthest from the VOC gas inlet 25 in the horizontal direction has a flow path cross-sectional area larger than that of the second VOC gas flow path 27b corresponding to the next second VOC gas blowing-out nozzle 26b, and the third VOC gas flow path 27c corresponding to the third VOC gas blowing-out nozzle 26c closest to the VOC gas inlet 25 in the horizontal direction has a flow path cross-sectional area smaller than that of the next second VOC gas flow path 27b. That is, in the VOC gas flow paths 27a, 27b, and 27c, the flow path cross-sectional area is adjusted according to the distance in the horizontal direction from the VOC gas inlet 25 to each of the VOC gas blowing-out nozzles 26a, 26b, and 26c, and the flow path cross-sectional area is adjusted in this manner, so that a pressure loss when the VOC gas flows through each of the VOC gas flow paths 27a, 27b, and 27c from the VOC gas inlet 25 to each of the VOC gas blowing-out nozzles 26a, 26b, 26c is equalized.

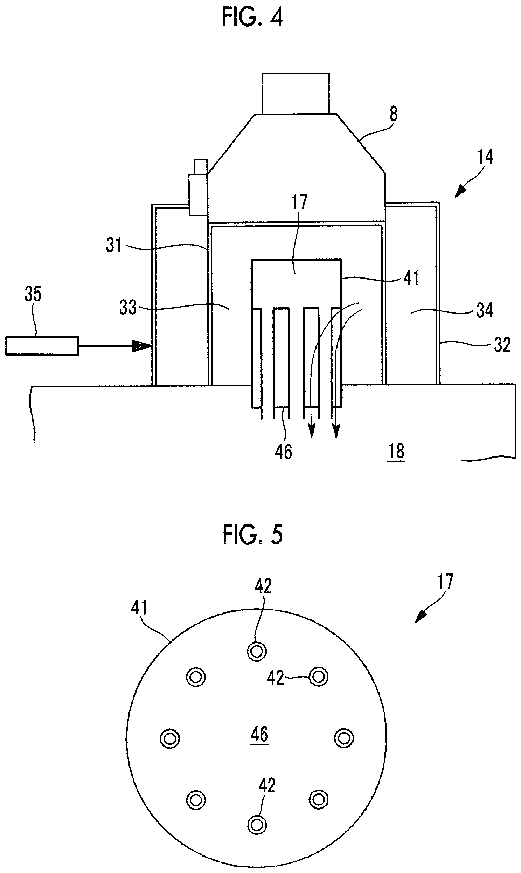

In Fig. 4, the wind box 14 is shown. The wind box 14 is provided with an inner casing 31 and an outer casing 32. In the inner casing 31, an inner space 33 to which the VOC mixed air obtained by mixing the VOC gas and the combustion air is supplied from the mixer 8 is formed inside thereof. The outer casing 32 is made to be a container surrounding the inner casing 31 and forms an outer space 34 between itself and the inner casing 31. Purge gas is supplied from a purge gas supplying device 35 to the outer space 34. As the purge gas, air or nitrogen gas is exemplified.

The volatile organic compound combustion device 1 is provided with a seal gas supplying device (not shown). The seal gas supplying device pressurizes air and blows seal air pressurized to a predetermined pressure (for example, 200 mbar) to a plurality of view ports (not shown) formed in the boiler main body 16, thereby cooling each view port.

Some of the seal air pressurized by the seal gas supplying device is supplied to the purge gas supplying device 35 as purge gas.

The burner 17 is disposed in the inner space 33 of the wind box 14, and the tip side (the lower end side) forming a flame is exposed to the combustion chamber 18 of the boiler main body 16.

In Fig. 5, a bottom view of the burner 17 is shown. The burner 17 is provided with a burner outer cylinder 41 and a plurality of fuel gas nozzles 42 to which fuel gas is supplied.

The burner outer cylinder 41 is formed in a cylindrical shape. The plurality of fuel gas nozzles 42 are respectively formed in a tubular shape and are disposed inside of the burner outer cylinder 41 side by side along a concentric circle centered on the central axis of the burner outer cylinder 41.

The space between the burner outer cylinder 41 and each of the fuel gas nozzles 42 serves as a VOC mixed air nozzle 46 through which the VOC mixed air flows. Therefore, the VOC mixed air flows so as to surround the fuel gas which is ejected from each of the fuel gas nozzles 42.

In the burner outer cylinder 41, an open portion or an opening portion which allows the flow of the VOC mixed air in the inner space 33 is provided. In this way, as shown by arrows in Fig. 4, the VOC mixed air flows into the inside of the burner outer cylinder 41 and is led to the VOC mixed air nozzle 46.

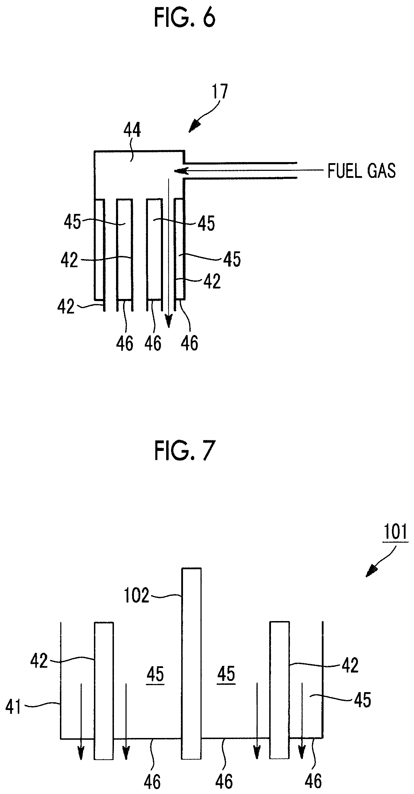

In Fig. 6, the flow of the fuel gas flowing through the burner 17 is indicated by arrows. That is, each of the fuel gas nozzles 42 is connected to a fuel gas header 44 to which the fuel gas is led, and the fuel gas is distributed from the fuel gas header 44 to each of the fuel gas nozzles 42. Further, the space between the fuel gas nozzles 42 serves as a VOC mixed air flow path 45 through which the VOC mixed air flows. The VOC mixed air flowing through the VOC mixed air flow path 45 is led to the VOC mixed air nozzle 46.

In this manner, the burner 17 injects the fuel gas from each fuel gas nozzle 42 and injects the VOC mixed gas from the periphery of each fuel gas nozzle 42 by the VOC mixed air nozzle 46, whereby the fuel gas and the VOC mixed air are diffused from the outlet of the burner 17 to form a single flame such that the flame falls within a furnace and are burned in the combustion chamber 18.

Subsequently, an operation of the volatile organic compound combustion device 1 will be described.

The combustion air is supplied from the boiler blower 7 to the mixer 8 at a predetermined pressure, and the VOC gas is supplied from the VOC gas blower 6 to the mixer 8 at a pressure calculated based on the pressure of the combustion air. The pressure of the VOC gas is set to be a pressure equal to the pressure of the combustion air or a pressure slightly higher than the pressure of the combustion air. The combustion air supplied to the mixer 8 is supplied to the inner space 33 of the wind box 14 through the combustion air outlet 24 of the mixer 8.

In the mixer 8, the plurality of VOC gas flow paths 27a, 27b, and 27c are formed in such a manner that the longer the flow path length is, the larger the flow path cross-sectional area becomes. Thus, an increase in pressure loss in each of the VOC gas flow paths 27a, 27b, and 27c, which supply the VOC gas to the VOC gas blowing-out nozzles 26a, 26b, and 26c farther from the VOC gas inlet 25 in the horizontal direction, is reduced. For this reason, the VOC gas supplied to the mixer 8 is equally supplied to the plurality of VOC gas blowing-out nozzles 26a, 26b, and 26c without a decrease in the flow rate of the VOC gas which is supplied to the VOC gas blowing-out nozzles 26a, 26b, and 26c farther from the VOC gas inlet 25.

The VOC gas is accelerated and blown out from the plurality of VOC gas blowing-out nozzles 26a, 26b, and 26c and is favorably mixed with the combustion air supplied through the combustion air outlet 24, to be supplied to the inner space 33 of the wind box 14.

In this manner, in the mixer 8, the VOC gas is equally supplied to each of the VOC gas blowing-out nozzles 26a, 26b, and 26c and injected therefrom, and therefore, the concentration of the volatile organic compound in the VOC gas which is injected from the respective VOC gas blowing-out nozzles 26a, 26b, and 26c can be equalized.

Further, in the mixer 8, the flow path cross-sectional area of each of the plurality of VOC gas flow paths 27a, 27b, and 27c is appropriately formed, whereby the combustion air which is supplied from the boiler blower 7 and the VOC gas which is supplied from the VOC gas blower 6 can be appropriately mixed with a small pressure loss. Further, the mixer 8 is formed in this manner, whereby it can be formed on a small scale and installed in a space-saving manner.

The VOC mixed air mixed by the mixer 8 fills the inner space 33 of the wind box 14 and is supplied to the burner 17 at a predetermined flow rate to be injected into the combustion chamber 18 of the boiler main body 16 through the VOC mixed air nozzle 46 of the burner 17. Fuel gas is further supplied from the fuel gas supplying device 15 to the burner 17 at a predetermined pressure. The fuel gas supplied from the fuel gas supplying device 15 to the burner 17 is injected into the combustion chamber 18 of the boiler main body 16 through the plurality of fuel gas nozzles 42 of the burner 17. The fuel gas injected from each fuel gas nozzle 42 is burned by using oxygen contained in the VOC mixed air injected from the VOC mixed air nozzle 46 and forms a flame. At this time, the volatile organic compounds contained in the VOC mixed air are burned using the oxygen contained in the VOC mixed air by the flame caused by the combustion of the fuel gas.

The flue gas generated by combustion of the fuel gas and the volatile organic compounds is partially supplied to the upper portion of the storage space of the crude tank 2 through the inert gas supply piping 19 (refer to Fig. 1) as an inert gas. The inert gas supplied to the crude tank 2 is mixed with the gas filled in the upper portion of the storage space of the crude tank 2 to reduce the oxygen concentration of the gas filled in the upper portion of the storage space of the crude tank 2. The volatile organic compound volatilizing from the crude oil stored in the crude tank 2 is prevented from igniting due to a reduction in the oxygen concentration of the gas filled in the upper portion of the storage space of the crude tank 2. The volatile organic compound volatilizing from the crude oil is mixed with the inert gas which is supplied to the crude tank 2 through the inert gas supply piping 19 and becomes VOC gas.

The VOC gas stored in the upper portion of the crude tank 2 is supplied to the VOC gas tank 5 through the VOC gas piping 11 and stored in the VOC gas tank 5. In this manner, the VOC gas which is supplied to the mixer 8 contains the volatile organic compounds volatilizing from the crude oil, and the flue gas generated by combustion.

Nitrogen contained in the combustion air or the fuel gas produces a nitrogen oxide (NOx) by reacting with oxygen when the fuel gas is burned at a high temperature by using the combustion air. The VOC mixed air which is used for the combustion of the fuel gas in the combustion chamber 18 has higher inert gas concentration than the combustion air which is supplied from the boiler blower 7 to the mixer 8, because the VOC gas contains the flue gas. Heat which is generated by the combustion of the fuel gas is also used for heating of the inert gas, whereby a temperature is lowered and the NOx which is produced is reduced.

In the wind box 14, there is a case where due to breakage, a through-hole is formed in the inner casing 31 of the wind box 14, a through-hole is formed in a mounting portion where the inner casing 31 and the mixer 8 are joined to each other, or a through-hole is formed in a mounting portion where the inner casing 31 and the boiler main body 16 are joined to each other. In a case where such a through-hole is formed, the purge gas which is supplied to the outer space 34 of the wind box 14 flows from the outer space 34 of the wind box 14 to the inner space 33 through the formed through-hole. Due to the purge gas which is supplied to the outer space 34 flowing into the inner space 33, the VOC mixed air existing in the inner space 33 of the wind box 14 is more reliably prevented from leaking to the outside of the wind box 14, compared to another wind box which is not provided with the outer casing 32.

The volatile organic compound combustion device 1 can be manufactured by remodeling an existing boiler. For example, the existing boiler is provided with the boiler blower 7, a wind box which is provided with only the inner casing 31, the fuel gas supplying device 15, the boiler main body 16, and the burner 17. The volatile organic compound combustion device 1 can be easily manufactured by forming the wind box 14 by adding the outer casing 32 to the inner casing 31, and adding the VOC gas tank 5, the VOC gas blower 6, the mixer 8, and the purge gas supplying device 35 to the existing boiler.

Fig. 7 shows a burner with which a volatile organic compound combustion device of a first comparative example is provided. A burner 101 has a VOC gas nozzle 102 added to the burner 17 in the embodiment described above. The VOC gas nozzle 102 is formed in a tubular shape and is disposed separately from the plurality of fuel gas nozzles 42 inside of the burner outer cylinder 41.

When the burner 101 injects the VOC gas into the combustion chamber 18 through the VOC gas nozzle 102, the VOC gas needs be pressurized to a pressure higher than the pressure in the combustion chamber 18 that is inside of a furnace, that is, to a pressure approximately equal to the pressure of the fuel gas which is injected from the plurality of fuel gas nozzles 42, and thus the volatile organic compound combustion device of the first comparative example needs to be provided with a dedicated compressor for pressurizing the VOC gas to a pressure approximately equal to the pressure of the fuel gas which is injected from the fuel gas nozzle 42.

In contrast, in the volatile organic compound combustion device 1 of this embodiment, the combustion air is mixed with the VOC gas, whereby it is possible to secure a pressure for injecting the VOC gas into the combustion chamber 18, even if a small-scale VOC gas blower 6 having a pressure ratio lower than that in a dedicated compressor which pressurizes the VOC gas to a pressure approximately equal to the pressure of the fuel gas which is injected from the fuel gas nozzle 42 is used. For this reason, in the volatile organic compound combustion device 1, such a dedicated compressor does not need to be provided, and thus the manufacturing cost can be reduced.

Further, the burner 17 of this embodiment does not need to be provided with the VOC gas nozzle 102 as in the first comparative example, and therefore, it can be more easily manufactured and the manufacturing cost can be further reduced.

In a volatile organic compound combustion device of a second comparative example, the plurality of fuel gas nozzles 42 of the burner 17 inject VOC mixed fuel in which the fuel gas and the VOC gas are mixed, thereby burning the volatile organic compounds. At this time, in the volatile organic compound combustion device of the second comparative example, when mixing the fuel gas and the VOC gas with the VOC mixed fuel, it is necessary to pressurize the VOC gas to a pressure approximately equal to the pressure of the fuel gas which is injected from the plurality of fuel gas nozzles 42, and thus, similar to the volatile organic compound combustion device of the first comparative example, a compressor for pressurizing the VOC gas to a pressure approximately equal to the pressure of the fuel gas which is injected from the plurality of fuel gas nozzles 42 needs to be provided.

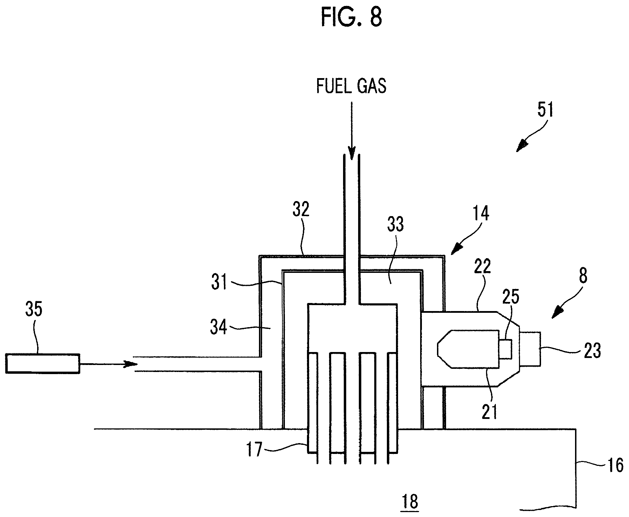

In Fig. 8, a modification example of the volatile organic compound combustion device is shown. In a volatile organic compound combustion device 51 of the modification example, the installation place of the mixer 8 in the wind box 14 is different from that in the embodiment described above, and others are formed in the same manner as in the embodiment described above. In the volatile organic compound combustion device 51, the mixer 8 and the wind box 14 are disposed so as to be aligned in the horizontal direction, and the mixer 8 is laterally installed such that the combustion air inlet 23 is horizontally aligned with the combustion air outlet 24. At this time, the mixer 8 is installed such that the combustion air supplied from the boiler blower 7 and the VOC gas supplied from the VOC gas blower 6 are injected in parallel in the horizontal direction, rather than vertically downward, into the inner space 33 of the wind box 14.

In the volatile organic compound combustion device 51, similar to the volatile organic compound combustion device 1 described above, the burner 17 burns the fuel gas by using the VOC mixed air mixed by the mixer 8, whereby it is possible to burn low-pressure VOC gas. For this reason, in the volatile organic compound combustion device 51, as a device for pressurizing the VOC gas, the VOC gas blower 6 which is formed on a smaller scale than a compressor which pressurizes the VOC gas to a pressure equivalent to the pressure of the fuel gas can be used.

The installation location of the mixer 8 is not limited to the vertically upper side or the lateral side of the wind box 14, and the mixer 8 may be installed at any position as long as it is an installation location where the combustion air supplied from the boiler blower 7 and the VOC gas supplied from the VOC gas blower 6 can be supplied to the inner space 33 of the wind box 14.

The mixer 8 can be replaced by another mixer which mixes VOC gas with combustion air. As such a mixer, a mixer which mixes VOC gas with combustion air by using a baffle plate is exemplified. Also in a volatile organic compound combustion device which is provided with such a mixer, similar to the volatile organic compound combustion device 1 described above, a dedicated compressor for pressurizing VOC gas does not need to be provided, and thus equipment for burning volatile organic compounds can be easily manufactured at low cost by using a small-scale VOC gas blower 6. Further, in the mixer 8 of this embodiment, the plurality of VOC gas blowing-out nozzles 26a, 26b, and 26c and the plurality of VOC gas flow paths 27a, 27b, and 27c are formed, whereby a pressure loss when the combustion air and the VOC gas are mixed can be reduced compared to the mixer using a baffle plate, and the mixer 8 can be formed on a small scale and installed in a space-saving manner. For this reason, in the volatile organic compound combustion device 1, the mixer 8 can be easily added to an existing boiler, compared to a volatile organic compound combustion device which is provided with the mixer using a baffle plate.

The seal air which is supplied to the plurality of view ports formed in the boiler main body 16 being used as the purge gas which is supplied to the outer space 34 between the inner casing 31 and the outer casing 32 of the wind box 14 is an example, and purge gas different from the seal air may be supplied to the outer space 34. As such purge gas, compressed air compressed by a compressor which is provided separately from the seal gas supplying device, for example, compressed air for instrumentation is exemplified.

In a case where the wind box 14 can sufficiently prevent the leakage of the VOC gas without supplying the purge gas to the outer space 34, the purge gas supplying device 35 can be omitted. Further, in a case where it is possible to sufficiently prevent breakage which causes the leakage of the VOC gas, the wind box 14 does not need to be formed in a double casing structure, and the wind box 14 can be formed such that the inner space 33 that is an atmosphere into which the combustion air and the VOC gas are injected and the outside of the wind box 14 are separated by a single layer. A volatile organic compound combustion device with such a wind box applied thereto also does not need to be provided with a dedicated compressor for pressurizing the VOC gas, similar to the volatile organic compound combustion device 1 described above, and thus equipment for burning volatile organic compounds can be easily manufactured at low cost by using a small-scale VOC gas blower 6.

The volatile organic compound combustion device 1 can also be applied to a boiler provided together with a crude tank which is not mounted on a tanker. As such a crude tank, a tank which is disposed on the ground is exemplified.

Further, the crude oil can be replaced by substances other than crude oil from which volatile organic compounds volatilize. As such substances, chemical products such as an adhesive and a paint are exemplified. A volatile organic compound combustion device which is applied to such a case also does not need to be provided with a dedicated compressor for pressurizing the VOC gas, similar to the volatile organic compound combustion device 1 in the embodiment described above, and thus equipment for burning volatile organic compounds can be easily manufactured at low cost by using a small-scale VOC gas blower 6.

### Reference Signs List

1: volatile organic compound combustion device
2: crude tank
5: VOC gas tank
6: VOC gas blower
7: boiler blower
8: mixer
11: VOC gas piping
14: wind box
16: boiler main body
17: burner
18: combustion chamber
19: inert gas supply piping
24: combustion air outlet
25: VOC gas inlet
26a, 26b, 26c: VOC gas blowing-out nozzle
27a, 27b, 27c: VOC gas flow path
31: inner casing
32: outer casing
33: inner space
34: outer space
35: purge gas supplying device

## Claims

1. A volatile organic compound combustion device comprising:
a mixer (8) which mixes VOC gas containing volatile organic compounds and combustion air; and
a burner (17) which burns fuel in a combustion chamber by using VOC mixed air mixed by the mixer (18),
**characterized in that**
the burner (17) includes
a burner outer cylinder (41),
a plurality of fuel gas nozzles connected to a fuel gas header (44) which distributes the fuel to each of the nozzles (42), the nozzles injecting the fuel into the combustion chamber (18) and disposed inside the burner outer cylinder (41), and
a VOC mixed air flow path (45) which is a space between the burner outer cylinder (41) and between the fuel gas nozzles (42) and which supplies the VOC mixed air to the combustion chamber (18).

2. The volatile organic compound combustion device according to Claim 1, further comprising:
a wind box (14) which supplies the VOC mixed air to the burner (17),
wherein the wind box (14) includes
an inner casing (31) in which an atmosphere to which the combustion air and the VOC gas are injected is formed inside thereof, and
an outer casing (32) which surrounds the inner casing (31).

3. The volatile organic compound combustion device according to Claim 2, further comprising:
a purge gas supplying device (35) which supplies purge gas to a space which is formed between the inner casing (31) and the outer casing (32).

4. The volatile organic compound combustion device according to Claim 3, wherein the purge gas is some of seal air produced for cooling a view port formed in a boiler main body (16) forming a combustion chamber (18) in which the fuel is burned.

5. The volatile organic compound combustion device according to any one of Claims 1 to 4, wherein the mixer (8) is formed with:
a combustion air outlet (24) for injecting the combustion air;
a plurality of VOC gas flow paths (27a, 27b, 27c) through which the VOC gas flows; and
a plurality of VOC gas blowing-out nozzles (26a, 26b, 26c) corresponding to the plurality of VOC gas flow paths, and
the plurality of VOC gas blowing-out nozzles (26a, 26b, 26c) inject the VOC gas to a region to which the combustion air is injected.

6. The volatile organic compound combustion device according to Claim 5, wherein the plurality of VOC gas flow paths (27a, 27b, 27c) are formed in such a manner that the longer the flow path length is, the larger the flow path cross-sectional area becomes.

7. The volatile organic compound combustion device according to any one of Claims 1 to 6, further comprising:
a VOC gas blower (6) which pressurizes the VOC gas to a pressure calculated based on a pressure of the combustion air and supplies the pressurized VOC gas to the mixer (8).

8. The volatile organic compound combustion device according to Claim 1, further comprising:
inert gas supply piping (19) which supplies, as the inert gas, flue gas which is generated by burning the fuel by using the VOC mixed air to a heavy oil tank which stores heavy oil from which the volatile organic compounds volatilize.

9. A boiler comprising: the volatile organic compound combustion device (1) according to any one of Claims 1 to 8.

10. A tanker comprising: the volatile organic compound combustion device (1) according to any one of Claims 1 to 8.

11. A volatile organic compound combustion method comprising:
a step of producing VOC mixed air by mixing VOC gas containing volatile organic compounds and combustion air;
a step of injecting fuel into the combustion chamber by using a plurality of fuel gas nozzles connected to a fuel gas header which distributes the fuel to each of the nozzles, the nozzles disposed inside the burner outer cylinder,
a step of supplying the VOC mixed air into a combustion chamber by using a VOC mixed air path which is a space between the burner outer cylinder and between the fuel gas nozzles, and
a step of burning the fuel injected by the fuel gas nozzles in the combustion chamber by using the VOC mixed air supplied by a VOC mixed air flow path.

12. The volatile organic compound combustion method according to Claim 11, wherein
the VOC gas has lower oxygen concentration than the combustion air and contains more inert gas than the combustion air.

## Patentansprüche

1. Vorrichtung zum Verbrennen flüchtiger organischer Verbindungen, umfassend:
einen Mischer (8), der VOC-Gas mischt, das flüchtige organische Verbindungen und Verbrennungsluft beinhaltet; und
einen Brenner (17), der Treibstoff in einer Verbrennungskammer unter Verwendung von VOC-gemischter Luft, gemischt durch den Mischer (18), verbraucht,
**dadurch gekennzeichnet, dass**
der Brenner (17) enthält
einen Brenneraußenzylinder (41),
eine Vielzahl an Brenngasdüsen, die mit einem Brenngaskrümmer (44) verbunden sind, der den Treibstoff zu jeder der Düsen (42) verteilt, wobei die Düsen den Treibstoff in die Verbrennungskammer (18) einspritzen und innerhalb des Brenneraußenzylinders (41) angeordnet sind, und
einen VOC-gemischten Luftstromweg (45), der ein Raum zwischen dem Brenneraußenzylinder (41) und zwischen den Brenngasdüsen (42) ist und der die VOC-gemischte Luft an die Verbrennungskammer (18) liefert.

2. Vorrichtung zum Verbrennen flüchtiger organischer Verbindungen nach Anspruch 1, weiter umfassend:
einen Luftkasten (14), der die VOC-gemischte Luft an den Brenner (17) liefert,
wobei der Luftkasten (14) enthält
ein Innengehäuse (31), in dem eine Atmosphäre gebildet ist, in die die Verbrennungsluft und das VOC-Gas eingespritzt werden, und
ein Außengehäuse (32), das das Innengehäuse (31) umgibt.

3. Vorrichtung zum Verbrennen flüchtiger organischer Verbindungen nach Anspruch 2, weiter umfassend:
eine Spülgasliefervorrichtung (35), die Spülgas an einen Raum liefert, der zwischen dem Innengehäuse (31) und dem Außengehäuse (32) gebildet ist.

4. Vorrichtung zum Verbrennen flüchtiger organischer Verbindungen nach Anspruch 3, wobei das Spülgas etwas von Dichtluft ist, die zum Kühlen eines Ansichtsfensters in einem Kesselhauptkörper (16), der eine Verbrennungskammer (18) bildet, in der der Treibstoff verbrannt wird, erzeugt wird.

5. Vorrichtung zum Verbrennen flüchtiger organischer Verbindungen nach einem der Ansprüche 1 bis 4, wobei der Mischer (8) gebildet ist mit:
einem Verbrennungsluftauslass (24) zum Einspritzen der Verbrennungsluft;
einer Vielzahl an VOC-Gasstromwegen (27a, 27b, 27c), durch die das VOC-Gas strömt; und
eine Vielzahl an VOC-Gasausblasdüsen (26a, 26b, 26c), entsprechend der Vielzahl an VOC-Gasstromwegen, und
die Vielzahl an VOC-Gasausblasdüsen (26a, 26b, 26c) das VOC-Gas zu einem Bereich einspritzen, zu dem die Verbrennungsluft eingespritzt wird.

6. Vorrichtung zum Verbrennen flüchtiger organischer Verbindungen nach Anspruch 5, wobei die Vielzahl an VOC-Gasstromwegen (27a, 27b, 27c) auf solche Weise gebildet sind, dass je länger die Stromweglänge ist, desto größer der Stromwegquerschnittsbereich wird.

7. Vorrichtung zum Verbrennen flüchtiger organischer Verbindungen nach einem der Ansprüche 1 bis 6, weiter umfassend:
ein VOC-Gasgebläse (6), das das VOC-Gas unter einen Druck setzt, der basierend auf einem Druck der Verbrennungsluft berechnet ist, und das unter Druck gesetzte VOC-Gas an den Mischer (8) liefert.

8. Vorrichtung zum Verbrennen flüchtiger organischer Verbindungen nach Anspruch 1, weiter umfassend:
Edelgaslieferverrohrung (19), die als das Edelgas Rauchgas, das durch Verbrennen des Treibstoffs unter Verwendung der VOC-gemischten Luft erzeugt wird, an einen Schweröltank liefert, der Schweröl lagert, von dem die flüchtigen organischen Verbindungen sich verflüchtigen.

9. Kessel, umfassend: die Vorrichtung zum Verbrennen flüchtiger organischer Verbindungen (1) nach einem der Ansprüche 1 bis 8.

10. Tanker, umfassend: Vorrichtung zum Verbrennen flüchtiger organischer Verbindungen (1) nach einem der Ansprüche 1 bis 8.

11. Verfahren zum Verbrennen flüchtiger organischer Verbindungen, umfassend:
einen Schritt zum Erzeugen von VOC-gemischter Luft durch Mischen von VOC-Gas, das flüchtige organische Verbindungen beinhaltet, und Verbrennungsluft;
einen Schritt zum Einspritzen von Brenngas in die Verbrennungskammer, unter Verwendung einer Vielzahl von Brenngasdüsen, die mit einem Brenngaskrümmer verbunden sind, der den Brennstoff an jede der Düsen verteilt, wobei die Düsen innerhalb des Brenneraußenzylinders angeordnet sind,
einen Schritt zum Liefern der VOC-gemischten Luft in eine Verbrennungskammer, unter Verwendung eines VOC-gemischten Luftwegs, der ein Raum zwischen dem Brenneraußenzylinder und zwischen den Brenngasdüsen ist, und
einen Schritt zum Verbrennen des Treibstoffs, der durch die Brenngasdüsen in die Verbrennungskammer eingespritzt wird, unter Verwendung der VOC-gemischten Luft, die durch einen VOC-gemischten Luftstromweg geliefert wird.

12. Verfahren zum Verbrennen flüchtiger organischer Verbindungen nach Anspruch 11, wobei
das VOC-Gas niedrigere Sauerstoffkonzentration hat als die Verbrennungsluft und mehr Edelgas beinhaltet als die Verbrennungsluft.

## Revendications

1. Dispositif de combustion de composés organiques volatils comprenant :
un mélangeur (8) qui mélange du gaz COV contenant des composés organiques volatils et de l'air de combustion ; et
un brûleur (17) qui brûle du combustible dans une chambre de combustion en utilisant l'air mélangé aux COV mélangé dans le mélangeur (18),
**caractérisé en ce que**
le brûleur (17) inclut
un cylindre extérieur de brûleur (41),
une pluralité de buses de gaz combustible connectées à un collecteur de gaz combustible (44) qui distribue le combustible à chacune des buses (42), les buses injectant le combustible dans la chambre de combustion (18) et disposées à l'intérieur du cylindre extérieur de brûleur (41), et
une voie de passage d'air mélangé aux COV (45) qui est un espace entre le cylindre extérieur de brûleur (41) et entre les buses de gaz combustible (42) et qui amène l'air mélangé aux COV à la chambre de combustion (18).

2. Dispositif de combustion de composés organiques volatils selon la revendication 1, comprenant en outre :
un coffre d'air (14) qui amène l'air mélangé aux COV au brûleur (17),
dans lequel le coffre d'air (14) inclut
un carter intérieur (31) dans lequel l'atmosphère dans laquelle l'air de combustion et le gaz COV sont injectés est formée, et
un carter externe (32) qui entoure le carter interne (31).

3. Dispositif de combustion de composés organiques volatils selon la revendication 2, comprenant en outre :
un dispositif d'amenée de gaz de purge (35) qui amène du gaz de purge à un espace qui est formé entre le carter intérieur (31) et le carter extérieur (32).

4. Dispositif de combustion de composés organiques volatils selon la revendication 3, dans lequel le gaz de purge est une partie de l'air pressurisé produit pour refroidir un hublot d'observation formé dans un corps principal de chaudière (16) formant une chambre de combustion (18) dans laquelle le combustible est brûlé.

5. Dispositif de combustion de composés organiques volatils selon l'une quelconque des revendications 1 à 4, dans lequel le mélangeur (8) est formé avec :
une sortie d'air de combustion (24) pour injecter l'air de combustion ;
une pluralité de voies de passage de gaz COV (27a, 27b, 27c) par lesquelles le gaz COV passe ; et
une pluralité de buses d'expulsion de gaz COV (26a, 26b, 26c) correspondant à la pluralité de voies de passage de gaz COV, et
la pluralité de buses d'expulsion de gaz COV (26a, 26b, 26c) injecte le gaz COV vers une zone vers laquelle l'air de combustion est injecté.

6. Dispositif de combustion de composés organiques volatils selon la revendication 5, dans lequel la pluralité de voies de passage de gaz COV (27a, 27b, 27c) est formée de telle manière que plus la voie de passage est longue, plus la section transversale de voie de passage devient grande.

7. Dispositif de combustion de composés organiques volatils selon l'une quelconque des revendications 1 à 6, comprenant en outre :
une soufflante de gaz COV (6) qui met sous pression le gaz COV à une pression calculée à partir d'une pression de l'air de combustion et amène le gaz COV sous pression au mélangeur (8).

8. Dispositif de combustion de composés organiques volatils selon la revendication 1, comprenant en outre :
une conduite d'alimentation en gaz inerte (19) qui amène, comme gaz inerte, du gaz de carneau qui est généré par combustion du combustible au moyen de l'air mélangé aux COV à un réservoir de mazout lourd qui contient du mazout lourd à partir duquel les composés organiques volatils se volatilisent.

9. Chaudière comprenant : le dispositif de combustion de composés organiques volatils (1) selon l'une quelconque des revendications 1 à 8.

10. Navire-citerne comprenant : le dispositif de combustion de composés organiques volatils (1) selon l'une quelconque des revendications 1 à 8.

11. Procédé de combustion de composés organiques volatils comprenant :
une étape de production d'air mélangé aux COV par mélange de gaz COV contenant des composés organiques volatils et d'air de combustion ;
une étape d'injection de combustible dans la chambre de combustion au moyen d'une pluralité de buses de gaz combustible raccordées à un collecteur de gaz combustible qui distribue le combustible à chacune des buses, les buses étant disposées dans le cylindre extérieur de brûleur,
une étape d'amenée de l'air mélangé aux COV dans une chambre de combustion au moyen d'une voie de passage d'air mélangé aux COV qui est un espace entre le cylindre extérieur de brûleur et entre les buses de gaz combustible, et
une étape de combustion du combustible injecté par les buses de gaz combustible dans la chambre de combustion au moyen de l'air mélangé aux COV amené par une voie de passage d'air mélangé aux COV.

12. Procédé de combustion de composés organiques volatils selon la revendication 11, dans lequel
le gaz COV a une concentration en oxygène inférieure à l'air de combustion et contient plus de gaz inerte que l'air de combustion.
